# EUROPÄISCHE PATENTANMELDUNG

(11) **EP 3 024 124 A1**
(43) Veröffentlichungstag der Anmeldung: **25.05.2016**
(21) Anmeldenummer: 14194534.5
(22) Anmeldetag: 24.11.2014
(51) Int. Cl.: H02K 9/02, H02K 3/38, H02K 1/24

(54) **Durchzugsbelüftete elektrisch erregte Synchronmaschine**

(71) Anmelder: Siemens Aktiengesellschaft, 80333 München (DE)
(72) Erfinder: Grünthaler, Andreas, 90402 Nürnberg (DE); Körner, Olaf, 90469 Nürnberg (DE); Stapfner, Johann, 94424 Arnstorf (DE)

(57) **Zusammenfassung**

Die Erfindung betrifft eine durchzugsbelüftete elektrisch erregte Synchronmaschine (1) mit einem Rotor (3), der auf einer Welle (7) drehfest positioniert ist, wobei der Rotor (3) eine Rotorwicklung (5) mit einzelnen Polspulen (15) aufweist, die jeweils um einen Polkörper (13) angeordnet sind, wobei an den Stirnseiten jedes Polkörpers (13) jeweils ein Spulenwickelkopf (16) ausgebildet ist, wobei an jedem Spulenwickelkopf (16) ein Schutzelement (11,6) vorgesehen ist, das die Isolierung des Spulenwickelkopfes (16) vor Abrasion durch Partikel im Kühlluftstrom schützt.

## Beschreibung

Die Erfindung betrifft eine durchzugsbelüftete elektrisch erregte Synchronmaschine.

Durchzugsbelüftete dynamoelektrische Maschinen, insbesondere elektrisch erregte Synchronmaschinen weisen konstruktionsbedingt und aus thermischen Gründen eine Luftströmung innerhalb der dynamoelektrischen Maschine auf, die teilweise entgegen der Bewegungsrichtung der rotierenden Teile dieser Maschine gerichtet ist. Damit stellt sich insbesondere bei vergleichsweise hohen Relativgeschwindigkeiten der unterschiedlichen Maschinenteile eine Abrasion u.a. an der Isolation der Spulen auf den Polkörpern des Rotors ein. Dies ist insbesondere dann der Fall, wenn eine derartige dynamoelektrische Maschine in einer staubhaltigen Umgebung eingesetzt ist.

Bisher wird ein Schutz der Polspulen dadurch erreicht, dass eine elastische Masse, z.B. Silikon direkt auf die von Abrasion betroffenen Wicklungsteile des Rotors gebracht wird.

Nachteilig dabei ist, dass dies zu einer schlechteren Entwärmung, insbesondere des Spulenwickelkopfes des Rotors führt. Ebenso sind Wartungsarbeiten, z.B. ein Nachimprägnieren der Wicklung des Rotors, nur mit vergleichsweise hohem Aufwand durchzuführen.

Ausgehend davon liegt der Erfindung die Aufgabe zugrunde, eine durchzugsbelüftete elektrisch erregte Synchronmaschine zu schaffen, die bei ausreichender Entwärmung und vergleichsweise guter Zugänglichkeit der einzelnen Maschinenteile, insbesondere des Rotors für Wartungsarbeiten einen ausreichenden Schutz gegen Abrasion bietet.

Die Lösung der gestellten Aufgabe gelingt durch eine durchzugsbelüftete elektrisch erregte Synchronmaschine mit einem Rotor, der auf einer Welle drehfest positioniert ist, wobei der Rotor eine Rotorwicklung mit einzelnen Polspulen aufweist, die jeweils um einen Polkörper angeordnet sind, wobei an den Stirnseiten des Polkörpers jeweils ein Spulenwickelkopf ausgebildet ist, wobei an diesen Spulenwickelkopf jeweils ein Schutzelement vorgesehen ist, das den Spulenwickelkopf vor Abrasion schützt.

Dabei wird unter einer durchzugsbelüftete elektrisch erregten Synchronmaschine eine Synchronmaschine verstanden, die über Spulen eines Rotors elektrisch erregt werden kann. Die Spulen werden dabei über Schleifringe oder über die an sich bekannten bürstenlosen Erregereinrichtungen elektrisch gespeist. Zumindest ein Eigen- und/oder zumindest ein Fremdlüfter erzeugt mittels Umgebungsluft einen oder mehrere Kühlluftströme durch die Maschine.

Die Schutzelemente sind derart angebracht, dass die Spulenwickelköpfe der Wicklung des Rotors vor Abrasion geschützt sind. Dies ist insbesondere dann gewährleistet, wenn die Schutzelemente in Drehrichtung des Rotors betrachtet jeweils vor den Spulenwickelköpfen angebracht sind.

Je nach Umgebungsbedingungen, Drehzahl der Maschine sind die Schutzelemente aus Metall (Stahl oder Aluminium) oder aus Kunststoff.

Schutzelemente aus Kunststoff einzeln oder als einstückige Schutzvorrichtung (ein Schutzelement pro Polkörper, die an einem gemeinsamen Ring angeordnet sind) sind leicht und einfach herstellbar, so dass sich die Trägheit des Läufers durch die Schutzelemente oder die Schutzvorrichtung nur unwesentlich verändert.

Die Schutzelemente oder Schutzvorrichtungen aus Kunststoff sind vergleichsweise einfach z.B. im Spritzgießverfahren herzustellen.

Auch die metallisch ausgeführten Schutzelemente sind einzeln oder als Schutzvorrichtung herstellbar. Dabei eignen sich beispielsweise Gießverfahren mit ggf. anschließender zumindest partieller spanender Nachbearbeitung vorgegebener Flächen, wie z.B. des Wellensitzes der Schutzvorrichtung.

Besonders einfach wird die Positionierung der Schutzelemente am Rotor, wenn sich sämtliche Schutzelemente einer dementsprechend ausgeführten Rotorwicklung auf einem Ring befinden, der lediglich noch auf einer Welle positioniert und drehfest angeordnet werden muss, um so die Spulenwickelköpfe zu schützen. Besonders einfach wird dabei die Konstruktion, wenn sowohl Ring als auch die einzelnen Schutzelemente der jeweiligen Polkörper des Rotors als einstückiges Material vorhanden sind. Es ist demnach pro Läuferdurchmesser und Polanzahl des Läufers eine eigene Schutzvorrichtung vorzusehen.

Demgegenüber sind einzelne Schutzelemente universeller einsetzbar, da jeder einzelne Polkörper mit seinem Schutzelement versehen wird.

In dieser weiteren Ausführung liegen die Schutzelemente einzeln vor und können durch dementsprechend ausgebildete Befestigungsvorrichtungen, wie Schnappverbindungen, Klemmvorrichtungen, Schraubverbindungen etc. am Polkörper des Rotors fixiert werden. Dies hat den Vorteil, dass unabhängig von der Anzahl der Pole des Rotors keine eigens ausgeführte Konstruktion mit einem Ring vorgesehen werden muss, sondern lediglich dementsprechende Schutzelemente dem jeweiligen Polkörper zugewiesen sind.

Um den Schutz vor Abrasion besonders vorteilhaft zu gestalten, sind die Schutzelemente schalenförmig ausgeführt. Dabei ist die geometrische Ausgestaltung der Schutzelemente derart, dass in Drehrichtung betrachtet ca. die erste Hälfte des Spulenwickelkopfes abdeckt ist. Dies ist besonders bei durchzugsbelüftete elektrisch erregten Synchronmaschine mit nur einer Drehrichtung vorteilhaft, da sich trotz dieser derart gestalteten Schutzelemente eine Kühlwirkung an den Spulen des Rotors einstellt

Vorteilhafterweise sind an jedem Schutzelement Befestigungsmittel vorgesehen, um an den Schutzelementen weitere Elemente anzubringen. Dies sind beispielsweise Lüfterflügel und/oder Wuchtgewichte, die ein nachträgliches Wuchten des Rotors gestatten.

In einer weiteren Ausführungsform sind die Schutzelemente an ihrem radial äußeren Rand mit einer Krümmung versehen, die einen im Wesentlichen radialen Luftstrom entlang der Schutzelemente im Wesentlichen axial umlenkt und so von der Stirnseite des Rotors wegführt. Durch diese Ausgestaltung des Schutzelements wird vermieden, dass ein radialer Luftstrom mit den Partikeln auf den Wickelkopf des Stators geführt wird und dort zu Abrasionsproblemen führt.

Vorteilhafterweise ist eine derartige Maschine mit schalenförmigen Schutzelementen nur für eine Drehrichtung ausgelegt. Die ist besonders vorteilhaft bei Generatoren die von Dieselmotoren angetrieben werden, wie z.B. auf Lokomotiven, Triebzügen, Miningtrucks oder Schiffen.

Je nach Material der Schutzelemente ist ein Spalt zwischen Schutzelement und Wickelkopf vorgesehen, der die isolationstechnischen Abstände einhält und außerdem die kühltechnischen Anforderungen erfüllt. Es wird dabei vorzugsweise ein Kühlluftstrom mit entschleunigten Partikeln in den Spalt zwischen Schutzelement und Oberfläche der Spule geführt.

Die Schutzelemente sind ausreichend beabstandet, wenn die Luftstrecken also die Isolationsabstände eingehalten sind und eine weitere Luftführung in diesen Spalt frei von Partikeln hoher kinetischer Energie stattfinden kann.

Durch die erfindungsgemäße Ausgestaltung des Abrasionsschutzes der Wicklung des Rotors, insbesondere der Spulenwickelköpfe durch die Schutzelemente bzw. Schutzvorrichtung ist der axiale Luftmassenstrom durch die Pollücken nicht eingeschränkt. Dies gewährleistet weiterhin eine maximale Kühlleistung der Spulenseiten und damit der Spulen des Rotors.

Die Erfindung sowie weitere vorteilhafte Ausgestaltungen der Erfindung sind den im Folgenden dargestellten Ausführungsbeispielen zu entnehmen. Dabei zeigen:
- FIG 1: einen Längsschnitt einer permanent erregten Synchronmotors mit Durchzugsbelüftung,
- FIG 2: eine Seitenansicht eines Läufers,
- FIG 3: perspektivische Darstellung des Abrasionsschutzes.

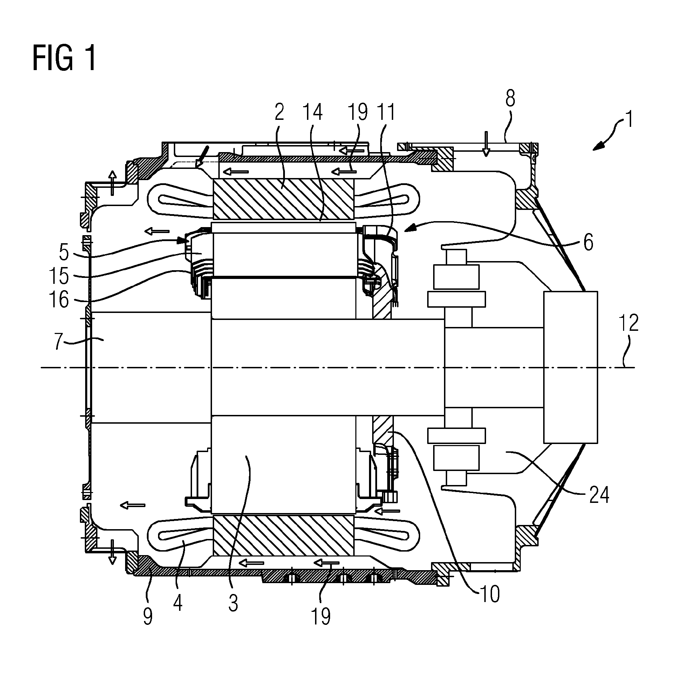

FIG 1 zeigt in einem Längsschnitt eine durchzugsbelüftete elektrische erregte Synchronmaschine 1 mit einem Stator 2 und einem Rotor 3. An den Stirnseiten des Stators 2 ist ein Statorwickelkopf 4 vorhanden. Der Rotor 3 weist radial nach außen ragende Polkörper 13 auf, die jeweils mit einer Polspule 15 versehen sind und in ihrer Gesamtheit die Rotorwicklung 5 ausbilden. Die Polspulen 15 werden über eine nicht näher dargestellte Schleifringanordnung oder einer bürstenlosen Erregereinrichtung mit elektrischer Leistung versorgt.

An den Stirnseiten des Rotors 3 sind dabei Spulenwickelköpfe 16 dieser Polspulen 15 sichtbar. Der Rotor 3 ist auf einer Welle 7 drehfest positioniert, die sich um eine Achse 12 dreht. Durch elektromagnetische Wechselwirkung der Wicklungssysteme von Stator 2 und Rotor 3 über den Luftspalt 14 hinweg, wird die dynamoelektrische Maschine als Motor oder als Generator betrieben.

Zur Kühlung dieser elektrischen Synchronmaschine 1 wird die Umgebungsluft verwendet, so dass beispielsweise über einen Stutzen 8 Kühlluft in den Innenraum der Synchronmaschine 1 geführt wird. Diese Kühlluftströme 19 werden innerhalb der Maschine verteilt und strömen unter anderem über Kühlkanäle in Stator 2, Rotor 3, den Pollücken 28 des Rotors 3 und den Luftspalt 14.

Aufgrund der Luftströmungsgeschwindigkeit, den damit von außen nach innen getragenen Partikeln und der gleichzeitigen vergleichsweise dazu hohen Relativgeschwindigkeit des Rotors 3 und damit der Rotorwicklung 5 tritt an ungünstigen Abschnitten des Spulenwickelkopfes 16 Abrasion der Isolierung des Spulenwickelkopfes 16 der Polspulen 15 und damit der Rotorwicklung 5 ein. Um dies zu vermeiden, sind erfindungsgemäß Schutzelemente 11 als Abrasionsschutz 6 vorgesehen.

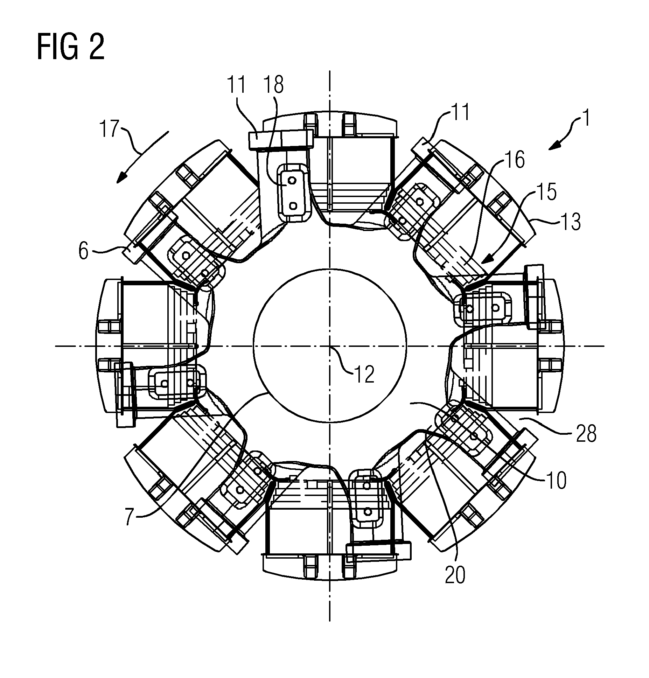

Dies ist beispielsweise auch der FIG 2 zu entnehmen, wo die Schutzelemente 11 auf einem Ring 10 angeordnet sind und so eine Schutzvorrichtung 21 bilden. An sich radial erstreckenden Armen 20 dieses Ringes 10 sind die Schutzelemente 11 angeordnet. Die Schutzelemente 11 sind im Querschnitt betrachtet schalenförmig ausgeführt und bilden somit vom Luftspalt 14 aus betrachtet einen Winkel α von ca. 90°. Der Winkel α eines Schutzelements 11 kann jedoch je nach Anwendung zwischen 60 und 150° ausgebildet sein. In Bewegungsrichtung 17 des Läufers bzw. Rotors 3 können somit nahezu keine Luftpartikel auf die Isolierung des Spulenwickelkopfes 16 prallen und die Isolierung beschädigen. Die Isolierung ist demnach geschützt, was die Betriebsdauer und die Wartungsintervalle der durchzugsbelüfteten elektrisch erregten Synchronmaschine 1 verlängert.

Selbstverständlich sind die Schutzelemente 11 auch separat einzeln am Polkörper 13 anbringbar, was ebenfalls die oben erwähnten Vorteile bzgl. des Schutzes der Isolierung der Wicklung des Rotors 3 und des Spulenwickelkopfes 16 beinhaltet.

FIG 2 zeigt außerdem einen achtpoligen Rotor 3 mit seinen Polkörpern 13, um die jeweils eine Polspule 15 gelegt ist. In Bewegungsrichtung 17 sind dabei nunmehr die Schutzelemente 11 an einem zentralen Ring 10 angeordnet. Die Schutzelemente 11 sind mit Mitteln 18 versehen, die eine Befestigung von Lüfterflügeln und/oder Wuchtgewichten erlauben.

Diese Mittel 18 werden bei Herstellung - also z.B. eines Gießvorganges - des Schutzelements 11 oder der Schutzvorrichtung 21 mit ausgebildet. Gegebenenfalls ist eine Nachbearbeitung dieser Mittel 18, oder anderer Flächen der Schutzelemente 11 oder der Schutzvorrichtung 21, wie Fräsen oder Bohren notwendig.

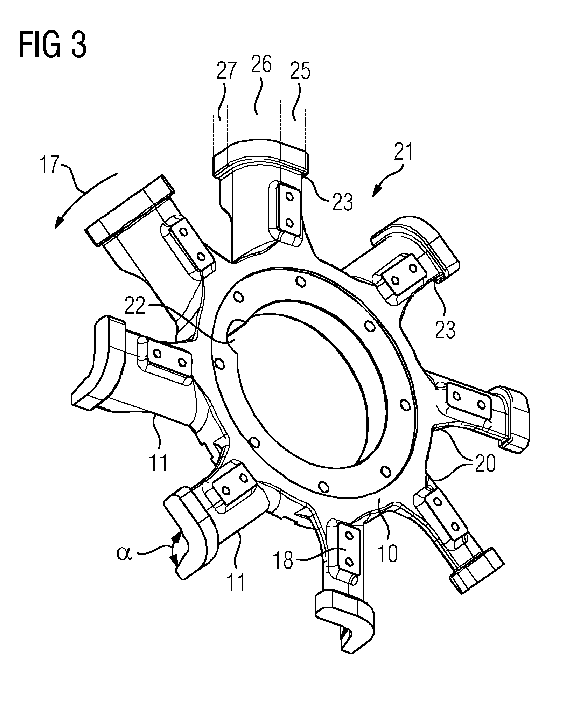

FIG 3 zeigt außerdem eine Ausnehmung 22 des Ringes 10, über die eine elektrische Verbindung zwischen Schleifringkörper oder einer bürstenlosen Erregervorrichtung und den Polspulen 15 des Rotors 3 erfolgt.

Gemäß FIG 3 ist am radial äußeren Ende der Schutzelemente 11 eine Krümmung 23 vorgesehen, die einen im Wesentlichen radialen Luftstrom im Wesentlichen axial umlenkt und so von der Stirnseite des Rotors 3 wegführt. Durch diese Ausgestaltung des Schutzelements 11 wird vermieden, dass ein radialer Luftstrom mit den darin enthaltenen Partikeln auf den Statorwickelkopf 4 prallt und dort zu Abrasionsproblemen an der dortigen Isolierung führt.

Vorteilhafterweise ist der Abschnitt des Schutzelements 11, der den Spulenwickelkopf 16 des Rotors 3 abschirmt mit seinem Arm 20 im Wesentlichen wie folgt ausgebildet. Das Schutzelement 11 unabhängig davon, ob es einen Teil einer Schutzvorrichtung 21 mit Ring 10 ausbildet oder einzeln am Polkörper 13 positioniert wird, weist drei Abschnitte 25, 26, 27 auf. Abschnitt 25 verläuft im Wesentlichen parallel zur Stirnseite des Rotors 3 und weist die Mittel 18 auf. Abschnitt 26 ist durch eine Biegung gekennzeichnet, an den sich vor allem im radial äußeren Bereich des Schutzelements 11 ein Abschnitt 27 anschließt, der sich im Wesentlichen in Richtung Pollücke 28 erstreckt.

Der Winkel α wird dabei im Wesentlichen durch die Biegung des Abschnitt 26 geschaffen.

Ein derartiger Abrasionsschutz 6 einer durchzugsbelüfteten elektrisch erregten Synchronmaschine mit schalenförmigen Schutzelementen 11 eignet sich vorzugsweise für eine Drehrichtung. Die ist besonders vorteilhaft bei Generatoren, die von Dieselmotoren angetrieben werden, wie z.B. auf Lokomotiven, Triebzügen, Mining-Trucks oder Schiffen.

Bei durchzugsbelüfteten elektrisch erregten Synchronmaschinen 1 für beide Drehrichtungen sind z.B. zwei Schalen je Spulenwickelkopf 16 mit je ca. 90° vorzusehen, oder es wird eine Schale als Schutzelement 11 mit ca. 180° verwendet, die somit mehr eine wannenförmige Struktur aufweist.

## Patentansprüche

1. Durchzugsbelüftete elektrisch erregte Synchronmaschine (1) mit einem Rotor (3), der auf einer Welle (7) drehfest positioniert ist, wobei der Rotor (3) eine Rotorwicklung (5) mit einzelnen Polspulen (15) aufweist, die jeweils um einen Polkörper (13) angeordnet sind, wobei an den Stirnseiten des Polkörpers (13) jeweils ein Spulenwickelkopf (16) ausgebildet ist, wobei an diesen Spulenwickelkopf (16) jeweils ein Schutzelement (11) vorgesehen ist, das den Spulenwickelkopf (16) vor Abrasion schützt.

2. Durchzugsbelüftete elektrisch erregte Synchronmaschine (1) nach Anspruch 1, **dadurch gekennzeichnet, dass** die Schutzelemente (11) auf einem Ring angeordnet sind, der drehfest mit der Welle (7) verbunden ist.

3. Durchzugsbelüftete elektrisch erregte Synchronmaschine (1) nach Anspruch 1, **dadurch gekennzeichnet, dass** jedes Schutzelement (11) an seinem Polkörper (13) positioniert ist, derart, dass sich zwischen Schutzelement und Spulenwickelkopf (16) ein vorgebbarer Luftspalt einstellt.

4. Durchzugsbelüftete elektrisch erregte Synchronmaschine (1) nach einem der vorhergehenden Ansprüche, **dadurch gekennzeichnet, dass** die Schutzelemente (11) schalenförmig ausgebildet sind.

5. Durchzugsbelüftete elektrisch erregte Synchronmaschine (1) nach einem der vorhergehenden Ansprüche, **dadurch gekennzeichnet, dass** die Schutzelemente (11) Mittel (18) u.a. zur Befestigung von Wuchtgewichten aufweisen.

6. Durchzugsbelüftete elektrisch erregte Synchronmaschine (1) nach einem der vorhergehenden Ansprüche, **dadurch gekennzeichnet, dass** am radial äußeren Rand jedes Schutzelements (11) eine Krümmung (23) vorgesehen ist, die einen radialen Luftstrom in im wesentlichen axiale Richtung weg von der Stirnseite des Rotors (3) lenkt.

7. Durchzugsbelüftete elektrisch erregte Synchronmaschine (1) nach einem der vorhergehenden Ansprüche, **dadurch gekennzeichnet, dass** die Synchronmaschine (1) im normalen Betriebsfall nur in eine Drehrichtung dreht.

8. Antrieb oder elektrischer Generator eines Schiffes, einer Lokomotive, eines Miningtrucks oder eines anderen elektrisch angetriebenen Fahrzeugs mit zumindest einer durchzugsbelüfteten elektrisch erregten Synchronmaschine (1) nach einem der vorhergehenden Ansprüche.
